# EUROPEAN PATENT SPECIFICATION

(11) **EP 3 486 534 B1**
(45) Date of publication and mention of the grant of the patent: **23.08.2023**
(21) Application number: 18207385.8
(22) Date of filing: 20.11.2018
(51) Int. Cl.: F16J 15/38, F16J 15/34, H02K 5/124, F02N 11/04

(54) **ROTATIONAL MECHANICAL SYSTEMS HAVING REDUCED FRICTION SEALING SURFACES**
ROTIERENDE MECHANISCHE SYSTEME MIT DICHTUNGSFLÄCHEN MIT REDUZIERTER REIBUNG
SYSTÈMES MÉCANIQUES ROTATIFS AYANT DES SURFACES D'ÉTANCHÉITÉ À FROTTEMENT RÉDUIT

(30) Priority: 21.11.2017 US 201715820226
(43) Date of publication of application: 22.05.2019
(73) Proprietor: Hamilton Sundstrand Corporation, Charlotte, NC 28217-4578 (US)
(72) Inventor: LEGROS, Craig R., Rockford, IL Illinois 61109 (US)
(74) Representative: Dehns

(56) References cited:
- EP-A1- 1 780 450
- WO-A1-01/44700
- WO-A1-2016/143479
- DE-A1-102005 033 707
- US-A1- 2006 104 806
- US-A1- 2007 096 399
- US-A1- 2014 265 145

## Description

### BACKGROUND

### 1. Field

The present disclosure relates to rotational mechanical systems, e.g., to aircraft starter generators.

### 2. Description of Related Art

Certain newer variable frequency starter generators (VFSGs) (e.g., such as those used in Boeing 787s) have a much larger tolerance dimensional stack up (mechanical and thermal tolerance) than conventional designs. In addition, the shaft rotational speeds (PV) are higher than conventional designs. This results in higher misalignment and force variation for the seal stator (which is stationary relative to the journal (input) shaft) which tracks the rotational journal shaft (i.e., the mating ring connected to the shaft) to seal under all normal operational conditions.

Such conventional methods and systems have generally been considered satisfactory for their intended purpose. However, there is still a need in the art for improved aircraft starter generators and other rotational mechanical systems. The present disclosure provides a solution for this need. US 2006/104806 A1 relates to a seal assembly for use in gas turbine engines, gas turbine engine starters and auxiliary power units.

### SUMMARY

An aircraft starter generator is provided as claimed in claim 1.

The journal shaft can be a mating ring attached to an input shaft. In certain embodiments, the interior sealing surface can be a radially outward facing interior sealing surface.

In certain embodiments, the journal shaft is an input shaft. In certain embodiments, the interior sealing surface can be a radially inward facing interior sealing surface.

The journal seal can be a carbon seal.

The anti-frictional coating can be a diamond-like coating (DLC). However, any other suitable coating is contemplated herein.

In accordance with at least one aspect of this disclosure, a housing for a variable frequency starter generator (VFSG) can include an interior sealing surface as disclosed herein and configured to receive a rotationally stationary seal assembly as disclosed herein. The interior sealing surface includes an anti-frictional coating.

In accordance with at least one aspect of this disclosure, a stationary housing for a rotational mechanical device is provided.

In accordance with at least one aspect of this disclosure, a method is provided as claimed in claim 8.

Applying the anti-frictional coating can include applying the anti-friction coating to a radially outward facing interior sealing surface. Applying the anti-frictional coating can include applying the anti-friction coating to a radially inward facing interior sealing surface.

Applying the anti-friction coating can include using vapor deposition. For example, using vapor deposition can include using plasma assisted chemical vapor deposition.

These and other features of the systems and methods of the subject disclosure will become more readily apparent to those skilled in the art from the following detailed description taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, embodiments thereof will be described in detail herein below with reference to certain figures, wherein:
Fig. 1 is a partial cross-sectional view of an embodiment of a generator in accordance with this disclosure;
Fig. 2 is a partial cross-sectional view of another embodiment of a generator in accordance with this disclosure.

### DETAILED DESCRIPTION

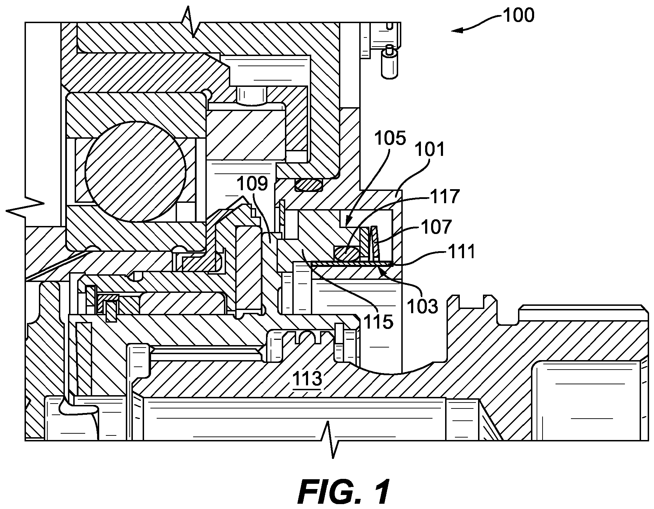

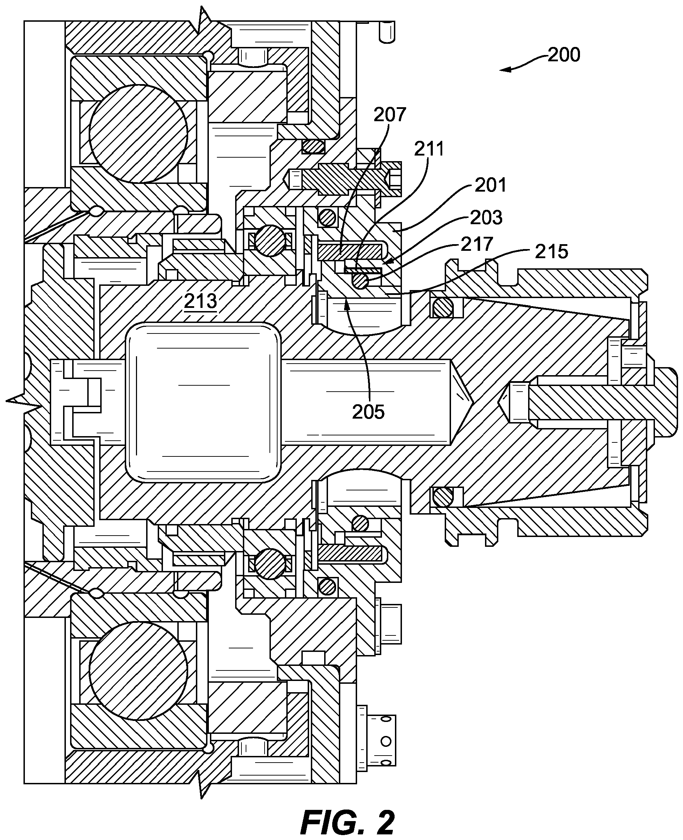

Reference will now be made to the drawings wherein like reference numerals identify similar structural features or aspects of the subject disclosure. For purposes of explanation and illustration, and not limitation, an illustrative view of an embodiment of a generator in accordance with the disclosure is shown in Fig. 1 and is designated generally by reference character 100. Other embodiments and/or aspects of this disclosure are shown in Fig. 2. The systems and methods described herein can be used to improve seal quality in a rotational mechanical device, e.g., an aircraft variable frequency starter generator (VFSG).

Referring to Fig. 1, an aircraft starter generator 100 can include a housing 101 defining an interior sealing surface 103. A rotationally stationary seal assembly 105 is disposed on the housing 101. The seal assembly 105 is axially biased by a spring member 107 to press against a journal shaft 109 to track axial and radial movement of the journal shaft 109 (e.g., due to thermal expansion (e.g., axial movement) and thrust loading of the journal shaft, due to wobble, etc.)

The generator 100 includes an anti-frictional coating 111 applied to the interior sealing surface 103 to reduce axial friction of the rotationally stationary seal assembly 105 to enhance axial tracking of the journal shaft 109. The anti-frictional coating 111 can be a diamond-like coating (DLC). However, any other suitable coating is contemplated herein.

As shown in Fig. 1, the journal shaft 109 can be a mating ring attached to an input shaft 113. In certain embodiments, as shown in Fig. 1, the interior sealing surface 103 can be a radially outward facing interior sealing surface 103. For example, as shown, the interior sealing surface 103 can be located in a pocket of the housing 101, and faces radially outward.

In certain embodiments, referring to Fig. 2, the journal shaft 213 can be an input shaft (e.g., any suitable surface thereof). In certain embodiments, such as that shown in Fig. 2, the interior sealing surface 203 can be a radially inward facing interior sealing surface 203. As shown in Fig. 2, the sealing surface 203 with an anti-frictional coating 211 faces inward toward the shaft 213. The interior sealing surface 203 can be located external to a pocket (e.g., where spring 207 is held) within the housing 201 of generator 200.

Referring to Figs. 1 and 2, the rotationally stationary seal assembly 105, 205 can include a journal seal 115, 215 and an o-ring seal 117, 217 that are biased together by the spring member 107, 207. The journal seal 117, 217 can be a carbon seal, for example, or any other suitable stationary seal configured to seal with a rotating component such as the journal shaft 113, 213.

According to the invention, the o-ring seal 117, 217 is a high temperature metallic and/or ceramic o-ring.

In accordance with at least one aspect of this disclosure, a housing (e.g., housing 100, 200) for a variable frequency starter generator (VFSG) (e.g., for an aircraft) can include an interior sealing surface (e.g., sealing surface 103, 203) configured to receive a rotationally stationary seal assembly (e.g., assembly 105, 205). The interior sealing surface (e.g., sealing surface 103, 203) includes an anti-frictional coating (e.g., coating 111, 211). The interior sealing surface (e.g., sealing surface 103, 203) can reduce friction for axial movement of the seal assembly (e.g., assembly 105, 205).

In accordance with at least one aspect of this disclosure, a stationary housing for a rotational mechanical device (e.g., integrate drive generators (IDGs), variable frequency starter generators (VFSGs), variable frequency generators (VFGs), pumps, ram air turbines (RATS), gearboxes, and/or motors) can include an interior sealing surface configured to receive a rotationally stationary seal assembly that is allowed to move axially to track a journal shaft. The interior sealing surface includes an anti-frictional coating. The housing can be used for any suitable rotational mechanical devices.

In accordance with at least one aspect of this disclosure, a method includes applying an anti-frictional coating (e.g., coating 111, 211) to an interior sealing surface of a housing of an aircraft starter generator. Applying the anti-frictional coating (e.g., coating 111, 211) can include applying a diamond-like coating (DLC) to the interior sealing surface.

Applying the anti-frictional coating (e.g., coating 111,211) can include applying the anti-friction coating (e.g., coating 111, 211) to a radially outward facing interior sealing surface. Applying the anti-frictional coating (e.g., coating 111,211) can include applying the anti-friction coating (e.g., coating 111, 211) to a radially inward facing interior sealing surface.

Applying the anti-friction coating (e.g., coating 111, 211) can include using vapor deposition. For example, using vapor deposition can include using plasma assisted chemical vapor deposition. Any other suitable method or process for application of the sealing surface as described herein-above is contemplated herein. The method can be applied to any housing for any suitable type of rotational mechanical device, not just aircraft generators.

As appreciated by those having ordinary skill in the art, certain seal assemblies, e.g., in VFSGs and other rotational mechanical devices, move axially (e.g., left and right in the orientation shown) depending on temperature and wobble from the journal shaft. In embodiments, a rotationally stationary journal seal tracks the rotating journal shaft to maintain a seal by being biased against the journal shaft. In embodiments, an o-ring seal moves axially with journal seal because it is pushed up on journal seal by the spring member (e.g., the same one that biases the journal seal).

Testing with traditional designs for VSFGs demonstrated that the o-ring dynamic drag force is variable and can be significant. This force directly subtracts from the seal assembly spring force which allows the journal seal to track the journal shaft, e.g., the mating ring. This friction force can counter act the spring force and prevent each part from moving properly which can cause leaks. Therefore, embodiments include an anti-friction coating applied to the surface where the seal assembly contacts the housing. The coefficient of friction reduction from, e.g., the DLC coating will reduce this friction force by an order of magnitude, thus the o-ring drag force can be reduced significantly. In addition to improving the seal tracking ability (e.g., sealing) with the reduced drag force, the seal spring load can also be reduced thus reducing the seal temperature and increasing seal life.

Leaking input seals are the top reason for removals in the certain mechanical product families (e.g., IDG, VFSG, VFG, Pumps, RATS, gearboxes and motors). All such devices can be made to include anti-frictional coatings where the seals interact with the housings which will allow significant benefit from the improved tracking ability of the seals through reduction of friction.

Any suitable combination(s) of any disclosed embodiments and/or any suitable portion(s) thereof is contemplated therein as appreciated by those having ordinary skill in the art.

The embodiments of the present disclosure, as described above and shown in the drawings, provide for improvement in the art to which they pertain. While the subject disclosure includes reference to certain embodiments, those skilled in the art will readily appreciate that changes and/or modifications may be made thereto without departing from the scope of the subject disclosure as defined by the claims.

## Claims

1. An aircraft starter generator (100), comprising:
a housing (101) defining an interior sealing surface (103);
a rotationally stationary seal assembly (105) disposed on the housing (101) that is axially biased by a spring member (107) to press against a journal shaft (109) to track axial and radial movement of the journal shaft (109); **characterised in that**
an anti-frictional coating (111) is applied to the interior sealing surface (103) configured to reduce axial friction of the rotationally stationary seal assembly (105) and the sealing surface with movement of the journal shaft (109), wherein the rotationally stationary seal assembly (105) includes a journal seal and an o-ring seal that are biased together by the spring member (107), and wherein the o-ring seal is a high temperature metallic and/or ceramic o-ring.

2. The generator of claim 1, wherein the journal shaft (109) is a mating ring attached to an input shaft.

3. The generator of claims 1 or 2, wherein the interior sealing surface (103) is a radially outward facing interior sealing surface.

4. The generator of claim 1, wherein the journal shaft (109) is an input shaft.

5. The generator of claims 1 or 4, wherein the interior sealing surface (103) is a radially inward facing interior sealing surface.

6. The generator of any preceding claim, wherein the journal seal is a carbon seal.

7. The generator of any preceding claim, wherein the anti-frictional coating (111) is a diamond-like coating (DLC).

8. A method, comprising:
applying an anti-frictional coating to an interior sealing surface of a housing of an aircraft starter generator according to any preceding claim, wherein the interior sealing surface (103) is configured to reduce axial friction between a rotationally stationary seal assembly (105) and the sealing surface with movement of the journal shaft (109), wherein the rotationally stationary seal assembly (105) includes a journal seal and an o-ring seal that are biased together by a spring member (107), and wherein the o-ring seal is a high temperature metallic and/or ceramic o-ring.

9. The method of claim 8, wherein applying the anti-frictional coating includes applying a diamond-like coating (DLC) to the interior sealing surface.

10. The method of claim 8, wherein applying the anti-frictional coating includes applying the anti-friction coating to a radially outward facing interior sealing surface.

11. The method of claim 8, wherein applying the anti-frictional coating includes applying the anti-friction coating to a radially inward facing interior sealing surface, and preferably wherein applying the anti-friction coating includes using vapor deposition.

12. The method of claim 11, wherein using vapor deposition includes using plasma assisted chemical vapor deposition.

## Patentansprüche

1. Luftfahrzeugstartergenerator (100), umfassend:
ein Gehäuse (101), das eine innere Dichtungsfläche (103) definiert;
eine drehfeste Dichtungsanordnung (105), die an dem Gehäuse (101) angeordnet ist und durch ein Federelement (107) axial vorgespannt ist, um gegen eine Zapfenwelle (109) zu drücken, um axialer und radialer Bewegung der Zapfenwelle (109) zu folgen;
**dadurch gekennzeichnet, dass**
eine reibungsmindernde Beschichtung (111) auf die innere Dichtungsfläche (103) aufgebracht ist, die dazu konfiguriert ist, axiale Reibung der drehfesten Dichtungsanordnung (105) und der Dichtungsfläche bei Bewegung der Zapfenwelle (109) zu reduzieren, wobei die drehfeste Dichtungsanordnung (105) eine Zapfendichtung und eine O-Ring-Dichtung beinhaltet, die durch das Federelement (107) zusammen vorgespannt werden, und wobei die O-Ring-Dichtung ein metallischer und/oder keramischer Hochtemperatur-O-Ring ist.

2. Generator nach Anspruch 1, wobei die Zapfenwelle (109) ein passender Ring ist, der an einer Eingangswelle befestigt ist.

3. Generator nach Anspruch 1 oder 2, wobei die innere Dichtungsfläche (103) eine radial nach außen weisende innere Dichtungsfläche ist.

4. Generator nach Anspruch 1, wobei die Zapfenwelle (109) eine Eingangswelle ist.

5. Generator nach Anspruch 1 oder 4, wobei die innere Dichtungsfläche (103) eine radial nach innen weisende innere Dichtungsfläche ist.

6. Generator nach einem der vorhergehenden Ansprüche, wobei die Zapfendichtung eine Kohlenstoffdichtung ist.

7. Generator nach einem der vorhergehenden Ansprüche, wobei die reibungsmindernde Beschichtung (111) eine diamantähnliche Beschichtung (DLC) ist.

8. Verfahren, umfassend:
Aufbringen einer reibungsmindernden Beschichtung auf eine innere Dichtungsfläche eines Gehäuses eines Luftfahrzeugstartergenerators nach einem der vorhergehenden Ansprüche,
wobei die innere Dichtungsfläche (103) dazu konfiguriert ist, axiale Reibung zwischen einer drehfesten Dichtungsanordnung (105) und der Dichtungsfläche bei Bewegung der Zapfenwelle (109) zu reduzieren, wobei die drehfeste Dichtungsanordnung (105) eine Zapfendichtung und eine O-Ring-Dichtung beinhaltet, die durch ein Federelement (107) zusammen vorgespannt werden, und wobei die O-Ring-Dichtung ein metallischer und/oder keramischer Hochtemperatur-O-Ring ist.

9. Verfahren nach Anspruch 8, wobei das Aufbringen der reibungsmindernden Beschichtung Aufbringen einer diamantähnlichen Beschichtung (DLC) auf die innere Dichtungsfläche beinhaltet.

10. Verfahren nach Anspruch 8, wobei das Aufbringen der reibungsmindernden Beschichtung Aufbringen der reibungsmindernden Beschichtung auf eine radial nach außen weisende innere Dichtungsfläche beinhaltet.

11. Verfahren nach Anspruch 8, wobei das Aufbringen der reibungsmindernden Beschichtung Aufbringen der reibungsmindernden Beschichtung auf eine radial nach innen weisende innere Dichtungsfläche beinhaltet und wobei das Aufbringen der reibungsmindernden Beschichtung bevorzugt Verwenden von Aufdampfung beinhaltet.

12. Verfahren nach Anspruch 11, wobei das Verwenden von Aufdampfung Verwenden von plasmaunterstützter chemischer Aufdampfung beinhaltet.

## Revendications

1. Générateur de démarrage d'aéronef (100), comprenant :
un carter (101) définissant une surface d'étanchéité intérieure (103) ;
un ensemble d'étanchéité fixe en rotation (105) disposé sur le carter (101) qui est sollicité axialement par un élément de ressort (107) pour s'appuyer contre un arbre de tourillon (109) afin de suivre le mouvement axial et radial de l'arbre de tourillon (109) ; **caractérisé en ce que**
un revêtement anti-frottement (111) est appliqué sur la surface d'étanchéité intérieure (103) configurée pour réduire le frottement axial de l'ensemble d'étanchéité fixe en rotation (105) et de la surface d'étanchéité avec le mouvement de l'arbre de tourillon (109), dans lequel l'ensemble d'étanchéité fixe en rotation (105) comporte un joint tourillon et un joint torique qui sont sollicités ensemble par l'élément de ressort (107), et dans lequel le joint torique est un joint torique métallique et/ou céramique haute température.

2. Générateur selon la revendication 1, dans lequel l'arbre de tourillon (109) est une contre-bague fixée à un arbre d'entrée.

3. Générateur selon la revendication 1 ou 2, dans lequel la surface d'étanchéité intérieure (103) est une surface d'étanchéité intérieure tournée radialement vers l'extérieur.

4. Générateur selon la revendication 1, dans lequel l'arbre de tourillon (109) est un arbre d'entrée.

5. Générateur selon les revendications 1 ou 4, dans lequel la surface d'étanchéité intérieure (103) est une surface d'étanchéité intérieure tournée radialement vers l'intérieur.

6. Générateur selon une quelconque revendication précédente, dans lequel le joint de tourillon est un joint en carbone.

7. Générateur selon une quelconque revendication précédente, dans lequel le revêtement anti-frottement (111) est un revêtement de type diamant (DLC).

8. Procédé comprenant :
l'application d'un revêtement anti-frottement sur une surface d'étanchéité intérieure d'un carter d'un générateur de démarrage d'aéronef selon une quelconque revendication précédente,
dans lequel la surface d'étanchéité intérieure (103) est configurée pour réduire le frottement axial entre l'ensemble d'étanchéité fixe en rotation (105) et la surface d'étanchéité avec le mouvement de l'arbre de tourillon (109), dans lequel l'ensemble d'étanchéité fixe en rotation (105) comporte un joint tourillon et un joint torique qui sont sollicités ensemble par un élément de ressort (107), et dans lequel le joint torique est un joint torique métallique et/ou céramique haute température.

9. Procédé selon la revendication 8, dans lequel l'application du revêtement anti-frottement comporte l'application d'un revêtement de type diamant (DLC) sur la surface d'étanchéité intérieure.

10. Procédé selon la revendication 8, dans lequel l'application du revêtement anti-frottement comporte l'application du revêtement anti-frottement sur une surface d'étanchéité intérieure tournée radialement vers l'extérieur.

11. Procédé selon la revendication 8, dans lequel l'application du revêtement anti-frottement comporte l'application du revêtement anti-frottement sur une surface d'étanchéité intérieure tournée radialement vers l'intérieur, et de préférence dans lequel l'application du revêtement anti-frottement comporte l'utilisation d'un dépôt en phase vapeur.

12. Procédé selon la revendication 11, dans lequel l'utilisation du dépôt en phase vapeur comporte l'utilisation du dépôt chimique en phase vapeur assisté par plasma.
